Europäisches Patentamt

**European Patent Office**

Office européen des brevets

(11) Publication number: **0 245 897 B1**

# EUROPEAN PATENT SPECIFICATION

(45) Date of publication of patent specification: **01.07.92**     (51) Int. Cl.⁵: **C01B 25/238**, C01F 11/46

(21) Application number: **87200767.9**

(22) Date of filing: **23.04.87**

(54) **Process of preparing virtually cadmium-free calcium sulphate and calcium sulphate prepared according to this process.**

(30) Priority: **29.04.86 NL 8601100**

(43) Date of publication of application:
**19.11.87 Bulletin 87/47**

(45) Publication of the grant of the patent:
**01.07.92 Bulletin 92/27**

(84) Designated Contracting States:
**AT BE CH DE ES FR GB GR IT LI NL SE**

(56) References cited:
**DE-A- 3 342 211**
**NL-A- 790 957**

**Phosphates and Phosphoric Acid, P. Becker, Ed. M. Dekker (1983) pp. 432,433,503-508**

(73) Proprietor: **DSM N.V.**
**Het Overloon 1**
**NL-6411 TE Heerlen(NL)**

(72) Inventor: **Spijker, Ruud**
**Rousselstraat 20**
**NL-1962 AJ Heemskerk(NL)**
Inventor: **Tjioe, Tjay Tjien**
**Rivierweg 72**
**NL-2903 AM Capelle a/d IJssel(NL)**
Inventor: **Witkamp, Geert Jan**
**Choorstraat 39a**
**NL-2611 JE Delft(NL)**

## Description

The invention relates to a process of preparing virtually cadmium-free calcium sulphate in the preparation of a liquid medium containing phosphoric acid, which comprises digestion with a mineral acid of cadmium-containing phosphate rock and separation from the liquid medium containing phosphoric acid of at least a portion of the calcium in the phosphate rock after precipitation by means of a solution containing sulphate ions, separation being effected in the form of calcium sulphate, in the presence of halogen ions.

Patent publication EP-A 116,988 discloses a process for the removal of heavy metals from a monocalcium phosphate solution obtained via the predigestion route, in which rock phosphate is digested by means of a sulphuric acid - phosphoric acid by adding, before the precipitation of calcium sulphate, a dithiocarbamate and separating the cadmium complexes formed. It is stated that the cadmium yield is increased by adding, for instance, a salt generating iodide or bromide ions to the monocalcium phosphate solution.

In practice, however, problems are often encountered, the dithiocarbamates to be added being instable at high temperatures and in an acid environment. In addition, the digestion of the phosphate rock via the predigestion route is essential in the process described.

The present invention provides a simple process which yields virtually cadmium-free calcium sulphate as by-product, which can be applied in any process in which phosphate rock is digested with a mineral acid, and which does not give rise to the above-mentioned problems.

According to the invention this is accomplished by the use of an effective amount of chlorine or bromine, or of iodine, added before or during the said precipitation, 200-20,000 ppm, calculated as chloride or bromide relative to acid, or respectively 50-5,000 ppm calculated as iodide relative to acid, being present in the acid during precipitation of the calcium sulphate to be separated.

It has, surprisingly, been found that, when halogen ions are present during precipitation of calcium sulphate, cadmium is virtually not incorporated into the precipitate, but remains present in the liquid medium containing phosphoric acid, so that virtually cadmium-free calcium sulphate is obtained. A predigestion is not necessary, and the use of dithiocarbamates also is superfluous.

As a consequence, the cadmium contained in the phosphate rock will end up virtually in its entirety in the liquid medium containing phosphoric acid. The preparation of phosphoric acid with a low cadmium content can be realized using known techniques, such as, for instance, liquid/liquid extraction. From European patent publication EP-A 94630 and patent publication DE-C-3 327 394 examples are known of the preparation of low-cadmium phosphoric acid solutions from phosphoric-acid-containing product acid obtained by the wet phosphoric acid process, use being made of liquid-liquid extraction with halogen salts of high-molecular amines. It has been found that a high halogen concentration in the phosphoric acid solution to be treated accelerates the extraction process and simplifies the regeneration process.

It has, moreover, been found that in the presence of halogens cadmium can easily be removed from the phosphoric-acid-containing product acid by using anion exchangers. An additional advantage of this process is that no extra halogens need be added for the removal of cadmium from acid.

Halogen ions can be obtained by addition of a composition generating halogen ions, for instance a hydrogen halogen such as HCl, HBr and HI, or alkali or earth alkali salts thereof. The effectivity decreases in the sequence iodide, bromide, chloride, and the amount of ions to be added therefore increases in the same sequence. Other factors playing an important role in determining the amount of halogens to be added are the oxidizability of the ions in the given environment and the extent to which the halogens can form complexes with other impurities in the phosphate rock. When use is made of iodide ions their amount in solution shall be 50-5000 ppm, while the amount shall be between 200 and 20,000 ppm when use is made of bromide or chloride ions.

The present process can in principle be applied in any wet phosphoric acid process, for instance one in which phosphate rock is digested using a mineral acid such as nitric acid, phosphoric acid, sulphuric acid or fluosilicic acid, or a mixture of these acids. In any case the addition of the halogen compound is to take place before precipitation of the calcium sulphate to be removed. If a sulphuric acid - phosphoric acid mixture is used for digestion of the phosphate rock, the composition generating halogen ions is added during or before the digestion; if digestion is effected by means of phosphoric acid, the composition generating halogen ions can be added both during the digestion and to the monocalcium phosphate solution.

The process according to the invention can also be applied in the so-called hemi-hydrate phosphoric acid preparation process. In this process the phosphate rock is digested with a sulphuric-acid-containing solution under process conditions giving rise to the formation of insoluble calcium sulphate hemihydrate. This is followed by recrystallization to calcium sulphate dihydrate by modification of the process conditions.

In this process it is, therefore, necessary to add the halogen compounds before recrystallization.

The subject process can also be applied in nitrophosphate processes in which the phosphate rock is digested by means of a solution containing nitric acid, resulting in a nitrophosphate solution, and in which subsequently the calcium ions from the phosphate rock are precipitated and separated off in the form of gypsum, use being made of sulphate ions. In these processes, cadmium incorporation into the gypsum already is substantially lower compared with wet phosphoric acid processes.

In general, in comparable processes without use of the subject invention the amount of cadmium incorporated in the calcium sulphate will already be 5 to 50 times lower in nitrophosphate processes than in wet phosphoric acid processes. Cadmium incorporation can be reduced further by application of the subject process.

The composition generating halogen ions can be added both during the digestion and to the nitrophosphate solution in the nitrophosphate processes.

The invention will now be elucidated with reference to the following examples, without, however, being restricted thereto.

Example 1

In a semi-batch calcium sulphate hemihydrate crystallization process 20 g calcium sulphate hemi-hydrate seeding crystals was suspended in 200 g of a 69 % phosphoric acid solution, with a temperature of 90¤C, which had the required sulphuric acid concentration. Monocalcium phosphate (MCP) solution with 3.2 % (wt.) CaO, and a sulphuric acid/phosphoric acid solution with 19 % (wt.) sulphuric acid and 51 % (wt.) phosphoric acid were simultaneously added in the reactor vessel, constant feeding rates being used. The MCP solution also contained the KI additive. The MCP solution was added at a rate of 8.4 ml a minute, while the rate at which the sulphuric acid/phosphoric acid solution was dosed at 4.2 ml a minute. Both the MCP solution and the sulphuric acid/phosphoric acid solution contained cadmium. The concentrations were set such that the liquid phase in the crystallizer was of the following composition: 69 % (wt.) phosphoric acid, 3 % (wt.) sulphuric acid, 0.11 % (wt.) KI and 36 ppm cadmium. The cadmium content of the calcium sulphate hemihydrate crystals, after correction for the seeding material, was 4 ppm.

Comparative example I

The process of Example 1 was repeated, now without addition of the KI additive to the MCP solution. After correction for the seeding material now a cadmium content of the hemihydrate crystals of 27 ppm was found.

Example 2

In a laboratory set up for semi-batchwise simulation of a hemihydrate process, the following reactants were added, simultaneously and continuously, to a stirred reaction vessel with a nominal capacity of 3 l: 1.5 kg/h ground rock phosphate (melange of 45 parts Moroccan phosphate and 55 parts Israeli phosphate), 1.8 kg/h of a 75 % $H_2SO_4$ solution, and 3.7 kg/h of a dilute technical-grade phosphoric acid solution with about 20 % $P_2O_5$. After the addition stage, which took some 17 minutes, the reactor contents were kept at 90-100¤C for 30 minutes while being properly stirred, use being made of a cooling/heating coil coupled to a thermostatted bath with forced circulation. At the end of this period, 19 g of a 35 % (wt.) HCl solution was added to the reaction mixture. The temperature of the calcium sulphate-hemihydrate suspension was subsequently changed to 68¤C; during this phase, washed and dried technical-grade gypsum was added as seeding material (5% of the total gypsum production).

The suspension subsequently was cooled stepwise from 68 → 64 → 59.5 → 55¤C, equal time intervals being used (in total 17.5 hours). Upon completion, a portion of the calcium sulphate dihydrate formed was filtered off, washed and dried.

The cadmium content of the calcium sulphate dihydrate crystals was 0.7 ppm.

Comparative example II

The process of example 2 was repeated, but without HCl being added to the reaction mixture.
The cadmium content of the calcium sulphate dihydrate crystals was 1.7 ppm.

Example 3

In a continuous calcium sulphate hemihydrate crystallization process 3.8 g/min. of 95 % sulphuric acid (room temperature) and 33.7 g/min. of an MCP solution (55 % (wt.) phosphoric acid, 3.6 % (wt.) calcium ions, 30 ppm cadmium ions, ammonium halogens in various concentrations as shown in Table 1) with a temperature of 95¤C were combined in a double-walled glass vessel with an effective capacity of 1 l, which was kept at a temperature of about 95¤C. The streams were so adjusted that the reaction liquid alway contained some per cents by weight of sulphate. Under these conditions the reactor contained ca. 11 per cent by weight of calcium sulphate hemihydrate. The stirring capacity was 1 W/l. The reaction volume was maintained at 1 l by continuous draining of the reactor contents. The average residence time in the reactor was 40 minutes.

The cadmium content of the calcium sulphate hemihydrate at the various halogen concentrations is given in Table 1.

Comparative example III

The process of Example 3 was repeated, always with a comparable sulphate content of the reaction liquid, but now using being made of an MCP solution not containing any halogens.
The results also are represented in Table 1.
The reduction factor included in Table 1 was calculated as being the amount of cadmium incorporated with halogen addition divided by the amount of cadmium incorporated without halogen addition.

## TABLE 1

| halogen added | ppm cadmium incorporated in calcium sulphate | | reduction factor |
| --- | --- | --- | --- |
| | with halogen | without halogen | |
| 90 ppm I | 5.2 | 8.1 | .7 |
| 150 ppm I | 4.5 | 7.5 | .6 |
| 1000 ppm Br | 3.0 | 7.5 | .4 |
| 300 ppm Cl | 5.2 | 8.1 | .6 |

**Claims**

1. Process for preparing virtually cadmium-free calcium sulphate in the preparation of a liquid medium containing phosphoric acid, which comprises digestion with a mineral acid of cadmium-containing phosphate rock and separation from the liquid medium containing phosphoric acid of at least a portion of the calcium in the phosphate rock after precipitation by means of a solution containing sulphate ions, separation being effected in the form of calcium sulphate, in the presence of halogen ions, this process being characterized by the use of an effective amount of chlorine or bromine, or of iodine, added before or during the said precipitation, 200-20,000 ppm, calculated as chloride or bromine relative to acid, or respectively 50-5,000 ppm calculated as iodide relative to acid, being present in the acid during precipitation of the calcium sulphate to be separated.

2. Process according to claim 1, characterized in that a composition capable of generating halogen ions is added before or during the digestion.

3. Process according to claim 1, characterized in that cadmium-containing phosphate rock is digested with a sulphuric acid-phosphoric acid mixture, such that calcium ions present in the phosphate rock precipitate in the form of calcium sulphate hemihydrate, the precipitate formed is recrystallized to calcium sulphate dihydrate, the calcium sulphate dihydrate is separated from the liquid medium containing phosphoric acid, a composition capable of generating halogen ions being added before the recrystallization to calcium sulphate dihydrate.

4. Process according to claim 1, characterized in that the phosphate rock is digested with phosphoric acid, so that a solution containing monocalcium phosphate is formed, a composition capable of generating halogen ions being added to the solution containing monocalcium phosphate.

5. Process according to claim 1, characterized in that the phosphate rock is digested with a solution containing nitric acid, so that a nitrophosphate solution is formed, a composition capable of generating halogen ions being added to the nitrophosphate solution.

**Revendications**

1. Procédé de préparation de sulfate de calcium pratiquement exempt de cadmium lors de la préparation d'un milieu liquide contenant de l'acide phosphorique, qui consiste à digérer avec un acide minéral d'une roche phosphatée contenant du cadmium et à séparer du milieu liquide contenant de l'acide phosphorique au moins une portion du calcium dans la roche phosphatée après précipitation à l'aide d'une solution contenant des ions sulfate, la séparation étant effectuée sous forme de sulfate de calcium, en présence d'ions halogène, caractérisé en ce qu'on utilise une quantité efficace de chlore ou brome ou d'iode qu'on ajoute avant ou pendant ladite précipitation à raison de 200 à 20000 ppm, qu'on calcule en chlorure ou en bromure, par rapport à l'acide, ou respectivement de 50 à 5000 ppm qu'on calcule en iodure par rapport à l'acide, cet additif étant présent dans l'acide pendant la précipitation du sulfate de calcium à séparer.

2. Procédé selon la revendication 1, caractérisé en ce qu'on ajoute avant ou pendant la digestion une composition capable d'engendrer des ions halogène.

3. Procédé selon la revendication 1, caractérisé en ce qu'on digère la roche phosphatée contenant du cadmium à l'aide d'un mélange d'acide sulfurique et d'acide phosphorique, de façon que les ions calcium présents dans la roche phosphatée précipitent sous forme de sulfate de calcium semi-hydraté, on recristallise le précipité formé en sulfate de calcium dihydraté, on sépare le sulfate de calcium dihydraté du milieu liquide contenant l'acide phosphorique,une composition capable d'engendrer des ions halogène étant ajoutée avant la cristallisation en sulfate de calcium dihydraté.

4. Procédé selon la revendication 1, caractérisé en ce qu'on digère la roche phosphatée avec de l'acide phosphorique de manière à former une solution contenant du phosphate monocalcique, une composition capable d'engendrer des ions halogène étant ajoutée à la solution contenant le phosphate monocalcique.

5. Procédé selon la revendication 1, caractérisé en ce qu'on digère la roche phosphatée avec une solution contenant de l'acide nitrique de manière à former une solution de nitrophosphate, une composition capable d'engendrer des ions halogène étant ajoutée à la solution de nitrophosphate.

**Patentansprüche**

1. Verfahren zum Herstellen von faktisch cadmiumfreiem Calciumsulfat bei der Herstellung eines phosphorsäurehaltigen flüssigen Mediums, das das Aufschließen von cadmiumhaltigem Phosphatgestein mit einer Mineralsäure und das Abtrennen zumindest eines Teiles des Calciums im Phosphatgestein nach Ausfällung mittels einer Sulfationen enthaltenden Lösung vom phosphorsäurehaltigen flüssigen Medium umfaßt, wobei die Abtrennung in Form von Calciumsulfat in Anwesenheit von Halogenionen bewirkt wird, welches Verfahren gekennzeichnet ist durch die Verwendung einer wirksamen Menge von Chlor, Brom oder Iod, die vor oder während der Ausfällung zugesetzt wird, wobei 200 bis 20 000 ppm, berechnet als Chlorid oder Bromid in bezug auf die Säure, bzw. 50 bis 5000 ppm, berechnet als Iodid in bezug auf die Säure, in der Säure während der Ausfällung des abzutrennenden Calciumsulfats vorhanden sind.

**2.** Verfahren nach Anspruch 1, dadurch gekennzeichnet, daß eine Zusammensetzung, die zum Erzeugen von Halogenionen imstande ist, vor oder während des Aufschließens zugesetzt wird.

**3.** Verfahren nach Anspruch 1, dadurch gekennzeichnet, daß cadmiumhaltiges Phosphatgestein mit einer Schwefelsäure-Phosphorsäuremischung aufgeschlossen wird, derart, daß im Phosphatgestein vorhandene Calciumionen in Form von Calciumsulfathemihydrat ausfallen, der gebildete Niederschlag zu Calciumsulfatdihydrat umkristallisiert wird und das Calciumsulfatdihydrat vom phosphorsäurehaltigen flüssigen Medium abgetrennt wird, wobei eine Zusammensetzung, die zum Erzeugen von Halogenionen imstande ist, vor der Umkristallisation zu Calciumsulfatdihydrat zugesetzt wird.

**4.** Verfahren nach Anspruch 1, dadurch gekennzeichnet, daß das Phosphatgestein mit Phosphorsäure aufgeschlossen wird, so daß eine Monocalciumphosphat enthaltende Lösung gebildet wird, wobei eine Zusammensetzung, die zum Erzeugen von Halogenionen imstande ist, der Monocalciumphosphat enthaltenden Lösung zugesetzt wird.

**5.** Verfahren nach Anspruch 1, dadurch gekennzeichnet, daß das Phosphatgestein mit einer salpetersäurehaltigen Lösung aufgeschlossen wird, so daß eine Nitrophosphatlösung gebildet wird, wobei eine Zusammensetzung, die zum Erzeugen von Halogenionen imstande ist, der Nitrophosphatlösung zugesetzt wird.